# EUROPÄISCHE PATENTSCHRIFT

(11) **EP 3 825 593 B1**
(45) Veröffentlichungstag und Bekanntmachung des Hinweises auf die Patenterteilung: **09.03.2022**
(21) Anmeldenummer: 19210084.0
(22) Anmeldetag: 19.11.2019
(51) Int. Cl.: F16L 11/16

(54) **SCHLAUCHLEITUNG UND VERFAHREN ZUR HERSTELLUNG EINER SCHLAUCHLEITUNG**
FLEXIBLE HOSE AND METHOD FOR MANUFACTURING SAME
CONDUITE SOUPLE ET PROCÉDÉ DE FABRICATION D'UNE CONDUITE SOUPLE

(43) Veröffentlichungstag der Anmeldung: 26.05.2021
(73) Patentinhaber: Schauenburg Ruhrkunststoff GmbH, 45478 Mülheim (DE)
(72) Erfinder: GADOW, Wolfgang, 52399 Merzenich (DE)
(74) Vertreter: Andrejewski - Honke Patent- und Rechtsanwälte Partnerschaft mbB

(56) Entgegenhaltungen:
- WO-A2-2008/065152
- GB-A- 2 004 618
- US-A- 3 112 771
- US-A- 3 554 237

## Beschreibung

Die Erfindung betrifft eine Schlauchleitung für ein fluides Medium - insbesondere einen Belüftungsschlauch - in Form eines Wickelschlauches mit zumindest einem zu einem Schlauchkörper wendelförmig gewickelten Kunststoffstreifen und zumindest einer mit dem Schlauchkörper verbundenen und den Schlauchkörper verstärkenden Verstärkungswendel. - Fernerhin betrifft die Erfindung ein Verfahren zur Herstellung einer solchen Schlauchleitung für ein fluides Medium.

Schlauchleitungen der vorstehend beschriebenen Art sind aus der Praxis in verschiedenen Ausführungsformen bekannt. Solche Leitungen werden für die unterschiedlichsten Zwecke verwendet, unter anderem auch als Belüftungsschläuche. Dazu müssen die Schlauchleitungen diverse Kriterien erfüllen. Wichtige Kriterien sind dabei eine gute thermische Isolationswirkung und eine gute akustische Isolationswirkung der Schlauchleitungen. Für eine einfache Verlegung der Schlauchleitungen ist es auch wesentlich, dass die Schlauchleitungen ausreichend flexibel ausgebildet sind. Weiterhin sollte eine ausreichende mechanische Stabilität der Schlauchleitungen gegeben sein und eine hinreichende Resistenz gegenüber äußeren Beanspruchungen. Die bislang bekannten Schlauchleitungen erfüllen in der Regel nur teilweise die vorgenannten Kriterien.

Die Dokumente US 3554237 A, WO2008/065152 A2 und US3112771 A offenbaren jeweils einen Wickelschlauch aus gewickelten Kunststoffstreifen und einem Metalldraht wobei die Kunststoffstreifen aus Schaumstoffmaterial bestehen.

Dementsprechend liegt der Erfindung das technische Problem zugrunde, eine Schlauchleitung der eingangs genannten Art anzugeben, die einerseits auf einfache und flexible Weise verlegbar ist und die andererseits eine optimale thermische Isolationswirkung und eine optimale akustische Isolationswirkung aufweist. Zudem soll die Schlauchleitung über eine ausreichende mechanische Festigkeit verfügen.

Zur Lösung dieses technischen Problems lehrt die Erfindung eine Schlauchleitung für ein fluides Medium - insbesondere einen Belüftungsschlauch - gemäß dem Gegenstand des Anspruchs 1. Die Erfindung ist ebenfalls ein Verfahren gemäß Anspruch 12.

Nach besonders bevorzugter Ausführungsform der Erfindung ist der polymere Kunststoffschaum des Kunststoffstreifens auf Basis zumindest eines thermoplastischen Kunststoffes aus der Gruppe "Polyvinylchlorid (PVC), Polyurethan (PU), Polyolefin" ausgebildet. Als Polyolefin kommt hier insbesondere Polyethylen (PE) und/oder Polypropylen (PP) infrage. Es liegt im Rahmen der Erfindung, dass der zumindest eine Kunststoffstreifen wendelförmig zu dem Schlauchkörper gewickelt ist, indem Längskantenabschnitte benachbarter Wicklungen überlappend miteinander verbunden sind.

Eine sehr empfohlene Ausführungsform, der im Rahmen der Erfindung besondere Bedeutung zukommt, ist dadurch gekennzeichnet, dass der Kunststoffschaum des Kunststoffstreifens ein Porenvolumen von 20 bis 75 %, insbesondere von 20 bis 70 %, bevorzugt von 25 bis 70 % und sehr bevorzugt von 30 bis 70 % aufweist. Gemäß einer besonders bevorzugten Ausführungsform der Erfindung weist der Kunststoffschaum des Kunststoffstreifens ein Porenvolumen von 35 bis 75 % und insbesondere von 40 bis 70 % auf. Das erfindungsgemäß eingerichtete Porenvolumen trägt ganz besonders zu den vorteilhaften Eigenschaften der Schlauchleitung bei und zwar insbesondere zu einer vorteilhaften akustischen Isolationswirkung und zu einer vorteilhaften thermischen Isolationswirkung.

Die erfindungsgemäße Schlauchleitung wird vorzugsweise für ein fluides Medium in Gasform eingesetzt. Bei dem fluiden Medium handelt es sich insbesondere um Luft oder ein Luftgemisch. Eine besonders empfohlene Verwendung der erfindungsgemäßen Schlauchleitung ist die Verwendung als Belüftungsschlauch und zwar vor allem als Belüftungsschlauch für Gebäude und dergleichen. Durch die Schlauchleitung bzw. durch den Belüftungsschlauch wird dann die Zuluft bzw. die Abluft der Gebäude geführt. Eine andere bevorzugte Verwendung der erfindungsgemäßen Schlauchleitung ist die Belüftung von Flüssigkeiten, beispielsweise die Belüftung von Teichen, Kläranlagen, Wasseraufbereitungsanlagen und dergleichen. Dazu eignet sich insbesondere eine erfindungsgemäße Schlauchleitung, bei der der Kunststoffschaum des gewickelten Kunststoffstreifens offenporig bzw. weitgehend offenporig ausgebildet ist, sodass eine Belüftung der Flüssigkeiten über die Schlauchleitungswandung möglich ist. Grundsätzlich ist die erfindungsgemäße Schlauchleitung aber auch für fluide Medien in Form von Flüssigkeiten geeignet.

Besondere Bedeutung kommt im Rahmen der Erfindung die Ausbildung des gewickelten Kunststoffstreifens als Kunststoffschaum zu. Die Eigenschaften des Kunststoffschaums führen in Kombination mit weiteren erfindungsgemäßen Merkmalen zu den Vorteilen der erfindungsgemäßen Schlauchleitung und tragen effektiv zur Lösung des erfindungsgemäßen technischen Problems bei. Hier ist unter anderem das Porenvolumen des Kunststoffschaumes relevant. - Empfohlenermaßen beträgt die Dichte des Kunststoffschaums des Kunststoffstreifens 0,4 bis 0,8 g/cm³, vorzugsweise 0,45 bis 0,7 g/cm³ und insbesondere 0,5 bis 0,7 g/cm³. Es empfiehlt sich, dass der Kunststoffschaum des Kunststoffstreifens eine Härte von 20 bis 55 Shore A, vorzugsweise von 20 bis 50 Shore A, bevorzugt von 25 bis 50 Shore A, zweckmäßigerweise von 25 bis 45 Shore A und insbesondere von 30 bis 45 Shore A aufweist.

Eine bevorzugte Ausführungsform der Erfindung zeichnet sich dadurch aus, dass die Poren des Kunststoffschaumes des Kunststoffstreifens zu zumindest 65 %, zweckmäßigerweise zu zumindest 70 %, vorzugsweise zu zumindest 75 % und bevorzugt zu zumindest 80 % als geschlossene Poren ausgebildet sind. Gemäß einer empfohlenen Ausführungsform sind zumindest 85 % der Poren des Kunststoffschaumes als geschlossene Poren ausgebildet. - Wenn hier und nachfolgend der Prozentanteil der Poren (geschlossene und/oder offene Poren) angegeben wird, bezieht sich dieser Prozentanteil insbesondere auf den Volumenanteil der jeweiligen Poren am gesamten Porenvolumen des Kunststoffschaumes. Eine bewährte Ausführungsvariante der Erfindung ist dadurch gekennzeichnet, dass die Poren des Kunststoffschaumes des Kunststoffstreifens vollständig bzw. im Wesentlichen vollständig als geschlossene Poren ausgebildet sind. Der geschlossenporigen Ausgestaltung des Kunststoffschaumes kommt besondere Bedeutung im Hinblick auf eine gute akustische und thermische Isolierung der Schlauchleitung zu.

Eine empfohlene Ausführungsvariante der Erfindung ist dadurch gekennzeichnet, dass ein Teil der Poren des Kunststoffschaumes des Kunststoffstreifens als geschlossene Poren ausgebildet ist und dass ein weiterer Teil der Poren dieses Kunststoffschaumes als offene Poren ausgebildet ist. Vorzugsweise sind dabei die offenen Poren im Bereich der Innenoberfläche der Schlauchwandung des Wickelschlauches angeordnet, wobei die Innenoberfläche den Fluidkanal für das den Wickelschlauch durchströmende fluide Medium begrenzt. Durch die Anordnung der offenen Poren an der Innenoberfläche des Kunststoffschaumes ergibt sich eine raue bzw. unebene Innenoberfläche und insoweit liegt der Erfindung die Erkenntnis zugrunde, dass solche Unebenheiten in der Innenoberfläche des Wickelschlauches die akustische Isolierung des Wickelschlauches verbessern.

Eine Ausführungsform der Erfindung zeichnet sich dadurch aus, dass offene Poren über die gesamte radiale Dicke der aus dem Kunststoffschaum gebildeten Schlauchwandung verteilt angeordnet sind. Zweckmäßigerweise sind die offenen Poren dabei homogen in der Schlauchwandung verteilt angeordnet. Dann bilden sich von der Innenoberfläche der Schlauchwandung bis zur Außenoberfläche der Schlauchwandung reichende Kanäle, die für ein durch den Fluidkanal des Wickelschlauches geleitetes gasförmiges fluides Medium durchlässig sind. Ein solcher erfindungsgemäßer Wickelschlauch lässt sich hervorragend als Belüftungsschlauch für Gewässer, beispielsweise für Teiche, Kläranlagen und Wasseraufbereitungsanlagen einsetzen. - Grundsätzlich kann ein solcher Wickelschlauch mit über die radiale Ausdehnung der Schlauchwandung verteilten offenen Poren auch als Bewässerungsschlauch für Gärten, Grünanlagen und dergleichen dienen, wenn ein flüssiges Bewässerungsmedium bzw. Wasser durch die erfindungsgemäße Schlauchleitung geleitet wird.

Gemäß einer bevorzugten Ausführungsform der Erfindung sind die Poren des Kunststoffschaumes des zumindest einen gewickelten Kunststoffstreifens zu 30 %, zweckmäßigerweise zu 40 % und insbesondere zu 50 % als offene Poren ausgebildet. Nach einer weiteren Ausführungsform sind die Poren des Kunststoffschaumes zu 55 % und insbesondere zu 60 % als offene Poren ausgebildet.

Es liegt im Rahmen der Erfindung, dass der wendelförmig gewickelte Kunststoffstreifen aus dem Kunststoffschaum die Innenoberfläche des das fluide Medium führenden Fluidkanals des Wickelschlauches bildet. Dabei können nach einer Ausführungsform - wie oben erläutert - offene Poren an der Innenoberfläche ausgebildet sein. Gemäß einer anderen Ausführungsvariante der Erfindung ist die Innenoberfläche des gewickelten Kunststoffstreifens bzw. des Kunststoffschaumes glatt bzw. im Wesentlichen glatt ausgebildet.

Eine besonders bewährte Ausführungsform der Erfindung ist dadurch gekennzeichnet, dass der Kunststoffstreifen bzw. der Kunststoffschaum des Kunststoffstreifens zumindest einen Füllstoff aufweist. Der zumindest eine Füllstoff ist dabei bis zu 50 Gew.-% in dem Kunststoffschaum enthalten. Gemäß einer Ausführungsform beträgt der Mengenanteil des zumindest einen Füllstoffes in dem Kunststoffschaum 2 bis 50 Gew.-%, vorzugsweise 5 bis 50 Gew.-% und insbesondere 7 bis 45 Gew.-%. Eine Ausführungsvariante der Erfindung ist dadurch gekennzeichnet, dass es sich bei dem Füllstoff um ein Metallsalz handelt und gemäß einer Ausführungsvariante um ein Erdalkalimetallsalz. Zweckmäßigerweise ist in dem Kunststoffschaum ein Füllstoff zumindest eines Metallsalzes aus der Gruppe "Calciumsalz, Bariumsalz, Antimonsalz, Aluminiumsalz" enthalten. Als Füllstoff kommt insbesondere Calciumcarbonat infrage. Dabei beträgt der Anteil des Calciumcarbonates in dem Kunststoffschaum bevorzugt 5 bis 50 Gew.-%. Auch Bariumsulfat, Antimonoxid und/oder Aluminiumoxid sind als Füllstoffe denkbar. Es liegt auch im Rahmen der Erfindung, dass Fasern als Füllstoff für den Kunststoffschaum vorgesehen werden. Dabei handelt es sich vorzugsweise um recycelte Polymerfasern, insbesondere recycelte Polyesterfasern und/oder zumindest eine Faserart aus der Gruppe "Glasfasern, Kohlefasern, Naturfasern". Als Naturfasern kommen dabei insbesondere Steinwolle, Kokosfasern, Baumwollfasern und/oder tierische Fasern (Haare, Wolle), wie beispielsweise Schurwolle infrage. Zweckmäßigerweise sind Fasern als Füllstoff in dem Kunststoffschaum in einem Mengenanteil von 2 bis 40 Gew.-%, insbesondere von 5 bis 40 Gew. -% enthalten.

Eine Ausführungsform der Erfindung ist dadurch gekennzeichnet, dass der gewickelte Kunststoffstreifen aus dem Kunststoffschaum die Innenschicht der Schlauchleitung bildet und dass zusätzlich noch zumindest eine Außenschicht der Schlauchleitung auf dem gewickelten Kunststoffstreifen vorhanden ist. Zweckmäßigerweise handelt es sich bei dieser zumindest einen zusätzlichen Außenschicht ebenfalls um eine aus einem gewickelten Kunststoffstreifen gebildete Außenschicht. Nach empfohlener Ausführungsform der Erfindung ist lediglich eine solche Außenschicht auf der Innenschicht aus dem Kunststoffschaum angeordnet. Vorzugsweise handelt es sich bei der Außenschicht um einen gewickelten Kunststoffstreifen aus Kunststoffschaum mit geschlossenen Poren bzw. im Wesentlichen mit geschlossenen Poren. Eine bewährte Ausführungsform ist dadurch gekennzeichnet, dass die Schlauchleitung lediglich den zumindest einen erfindungsgemäß gewickelten Kunststoffstreifen mit der zumindest einen Verstärkungswendel als Innenschicht aufweist und zusätzlich lediglich die eine Außenschicht, die vorzugsweise ebenfalls aus zumindest einem gewickelten Kunststoffstreifen aus Kunststoffschaum besteht. - Grundsätzlich kann der zu dem Schlauchkörper wendelförmig gewickelte Kunststoffstreifen aus dem Kunststoffschaum auch eine Zwischenschicht zwischen zumindest einer Außenschicht aus Kunststoff bzw. aus einem gewickelten Kunststoffstreifen und zumindest einer Innenschicht aus Kunststoff bzw. aus einem gewickelten Kunststoffstreifen bilden. Erfindungsgemäß weist der Wickelschlauch zumindest eine mit dem Schlauchkörper verbundene und den Schlauchkörper verstärkende Verstärkungswendel auf. Eine empfohlene Ausführungsform der Erfindung ist dadurch gekennzeichnet, dass die Verstärkungswendel aus zumindest einem Kunststoff besteht bzw. im Wesentlichen besteht. Dabei liegt es im Rahmen der Erfindung, dass die Verstärkungswendel aus zumindest einem bzw. einem Kunststoff aus der Gruppe "Polyamid (PA), Polyvinylchlorid (PVC), Polyolefin, Polyurethan (PU)" besteht bzw. im Wesentlichen besteht. Erfindungsgemäß handelt es sich bei der Verstärkungswendel um eine Verstärkungswendel aus Kunststoff, die durch Extrusion hergestellt ist. Eine solche Verstärkungswendel hat sich im Rahmen der Erfindung besonders bewährt.

Der Querschnitt der erfindungsgemäßen Verstärkungswendel kann grundsätzlich unterschiedliche Ausgestaltungen aufweisen. Die Verstärkungswendel kann im Querschnitt rund oder eckig ausgebildet sein. Bevorzugt ist eine runde Ausgestaltung des Querschnittes der Verstärkungswendel. Es empfiehlt sich dabei, dass der Querschnitt der Verstärkungswendel kreisrund oder oval ausgebildet ist.

Eine sehr empfohlene Ausführungsform der Erfindung ist dadurch gekennzeichnet, dass die Verstärkungswendel im gewickelten Zustand des Kunststoffstreifens aus der Außenoberfläche des Schlauchkörpers nach außen hin herausragt und insbesondere aus der Außenoberfläche der gesamten Schlauchleitung nach außen hin herausragt. Das Herausragen der Verstärkungswendel bezieht sich dabei insbesondere auf das Herausragen der mit dem Kunststoff des Kunststoffstreifens bedeckten Verstärkungswendel. Das Aggregat aus der Verstärkungswendel und dem die Verstärkungswendel bedeckenden Kunststoffschaum ragt bei dieser bevorzugten Ausführungsform um den Abstand a aus der übrigen Außenoberfläche des gewickelten Schlauchkörpers bzw. aus der übrigen Außenoberfläche der Schlauchleitung heraus. Dieser Abstand a beträgt bevorzugt mindestens 5 % und maximal 90 % des Durchmessers bzw. des größten Durchmessers der reinen Verstärkungswendel. Der größte Durchmesser bezieht sich dabei insbesondere auf eine Verstärkungswendel mit nicht exakt kreisrundem Querschnitt. Zweckmäßigerweise beträgt der Abstand a mindestens 10% und maximal 85 % und bevorzugt mindestens 20 % und maximal 70 % des Durchmessers bzw. des größten Durchmessers der reinen Verstärkungswendel. Eine besonders bevorzugte Ausführungsform der Erfindung zeichnet sich dadurch aus, dass die Verstärkungswendel bezüglich ihres Querschnittsumfanges vollständig von dem wendelförmig gewickelten Kunststoffstreifen aus dem Kunststoffschaum eingeschlossen ist und dass diese Verstärkungswendel mit dem sie außen bedeckenden Kunststoff bzw. Kunststoffschaum um den Abstand a aus der übrigen Außenoberfläche des Schlauchkörpers und insbesondere der gesamten Schlauchleitung hervorragt.

Es liegt im Rahmen der Erfindung, dass die Verstärkungswendel bezüglich der Innenoberfläche der Schlauchleitung vollständig in die Schlauchleitung integriert ist und somit nicht bzw. im Wesentlichen nicht nach innen aus der übrigen Innenoberfläche des Schlauchkörpers bzw. der Schlauchleitung hervorragt. Gemäß einer anderen Ausführungsvariante der Erfindung ragt die Verstärkungswendel - zweckmäßigerweise mit dem sie bedeckenden Kunststoff bzw. Kunststoffschaum - um einen Abstand b aus der Innenoberfläche der Schlauchleitung nach innen in den Flutkanal vor. Dieser Abstand b entspricht nach einer empfohlenen Ausführungsform der Erfindung maximal 40 %, bevorzugt maximal 30 % und insbesondere maximal 20 %, besonders bevorzugt maximal 10 % des Durchmessers der reinen Verstärkungswendel bzw. des größten Durchmessers der reinen Verstärkungswendel.

Nach einer empfohlenen Ausführungsform der Erfindung ist der Durchmesser bzw. der größte Durchmesser der Verstärkungswendel größer als die radiale Dicke der Schlauchwandung des Schlauchkörpers bzw. der Schlauchleitung oder der Durchmesser bzw. der größte Durchmesser der Verstärkungswendel beträgt mindestens 50 %, zweckmäßigerweise mindestens 60 %, bevorzugt mindestens 70 % und insbesondere mindestens 80 % der radialen Dicke der Schlauchwandung des Schlauchkörpers bzw. der Schlauchleitung. Gemäß einer Ausführungsvariante der Erfindung beträgt der Durchmesser bzw. der größte Durchmesser der Verstärkungswendel mindestens 85 % und insbesondere mindestens 90 % der radialen Dicke der Schlauchwandung des Schlauchkörpers bzw. der Schlauchleitung. Die radiale Dicke der Schlauchwandung bezieht sich hier auf die Bereiche des Schlauchkörpers bzw. der Schlauchleitung ohne die Verstärkungswendel. So wird quer bzw. senkrecht zur Längsmittelachse des Schlauchkörpers bzw. der Schlauchleitung gemessen.

Eine bewährte Ausführungsform der Erfindung ist dadurch gekennzeichnet, dass die Schlauchleitung lediglich den Schlauchkörper aus dem zumindest einen wendelförmig gewickelten Kunststoffstreifen aus Kunststoffschaum aufweist. Bei dieser Ausführungsform sind also neben dem Kunststoffstreifen oder neben den Kunststoffstreifen aus Kunststoffschaum keine weiteren Schichten außen oder innen an der Schlauchleitung vorhanden.

Nach empfohlener Ausführungsform der Erfindung ist der Mittelpunkt M des Verstärkungswendelquerschnittes bezüglich der radialen Wandungsdicke des Schlauchkörpers bzw. der Schlauchleitung in der mittleren Hälfte und bevorzugt im mittleren Drittel des Schlauchkörpers bzw. der Schlauchleitung angeordnet. Gemäß einer bewährten Ausführungsform ist der Mittelpunkt M bezüglich der radialen Wandungsdicke im mittleren Viertel und besonders bevorzugt mittig bzw. im Wesentlichen mittig in dem Schlauchkörper bzw. in der Schlauchleitung angeordnet. Diese bevorzugten Anordnungen der Verstärkungswendel beziehen sich auf die Abschnitte der Schlauchwandung, in denen die Verstärkungswendel außenseitig und innenseitig von dem Kunststoffschaum des Kunststoffstreifens bzw. der Kunststoffstreifen bedeckt ist. Mittelpunkt M des Verstärkungswendelquerschnittes meint in diesem Zusammenhang insbesondere den Mittelpunkt der Querschnittsfläche der Verstärkungswendel. Im Falle einer kreisrunden Querschnittsfläche der Verstärkungswendel handelt es sich bei dem Mittelpunkt somit um den Kreismittelpunkt.

Nach bevorzugter Ausführungsform der Erfindung beträgt der Innendurchmesser dᵢ des Fluidkanals des Schlauchkörpers bzw. der Schlauchleitung 5 mm bis 250 mm, bevorzugt 10 mm bis 200 mm und besonders bevorzugt 15 mm bis 180 mm. Innendurchmesser dᵢ meint in diesem Zusammenhang insbesondere den Innendurchmesser des Fluidkanals des Schlauchkörpers bzw. der Schlauchleitung quer bzw. senkrecht zur Längsmittelachse der Schlauchleitung.

Vorzugsweise beträgt die radiale Wandungsdicke w der Schlauchwandung des Schlauchkörpers bzw. der Schlauchleitung zwischen 0,5 und 30 mm, vorzugsweise zwischen 0,8 und 20 mm und insbesondere zwischen 1,0 bis 15 mm sowie bevorzugt zwischen 1,0 und 12 mm. Nach einer besonders bevorzugten Ausführungsform der Erfindung beträgt die radiale Wandungsdicke w 1,5 bis 15 mm und vorzugsweise 1,5 bis 10 mm.

Gemäß einer Ausführungsvariante der Erfindung ist die Schlauchwandung des Schlauchkörpers bzw. der Schlauchleitung elektrisch leitfähig ausgebildet. Dazu können elektrisch leitfähige Zusatzstoffe bzw. Additive in der Schlauchwandung vorhanden sein.

Es liegt im Rahmen der Erfindung, dass der axiale Abstand A zweier benachbarter Verstärkungswendelabschnitte das 2-fache bis 50-fache, bevorzugt das 2,5-fache bis 40-fache und insbesondere das 3-fache bis 30-fache, besonders bevorzugt das 4-fache bis 20-fache des Durchmessers bzw. des größten Durchmessers der Verstärkungswendel beträgt. Axialer Abstand A meint dabei insbesondere den Abstand der Verstärkungswendelabschnitte parallel zur Längsmittelachse des Schlauchkörpers bzw. der Schlauchleitung.

Zur Lösung des technischen Problems lehrt die Erfindung weiterhin ein Verfahren zur Herstellung einer Schlauchleitung bzw. eines Wickelschlauches, wobei zumindest ein Kunststoffstreifen aus einem polymeren Kunststoffschaum unmittelbar auf einen Wickelkern extrudiert wird und auf dem Wickelkern wendelförmig zu dem Wickelschlauch gewickelt wird und wobei ein Kunststoffschaum für den Kunststoffstreifen eingesetzt wird, der ein Porenvolumen von 10 bis 75 %, insbesondere von 15 bis 70 % aufweist. Bevorzugte Parameterbereiche und Ausführungsformen für das Porenvolumen des erfindungsgemäßen Kunststoffschaumes wurden weiter oben bereits angegeben. Zweckmäßigerweise wird bei dieser Ausführungsform der zumindest eine Kunststoffstreifen bzw. der eine Kunststoffstreifen aus einem feststehenden Extruder auf einen rotierenden Wickelkern unmittelbar aufextrudiert und auf dem Wickelkern wendelförmig zu dem Wickelschlauch gewickelt. Es liegt auch im Rahmen der Erfindung, dass zumindest ein weiterer Extruder für das Aufextrudieren eines weiteren Kunststoffstreifens auf den Wickelkern vorgesehen ist. Auch dieser Kunststoffstreifen kann aus einem Kunststoffschaum bestehen. Nach einer Ausführungsform der Erfindung wird aus dem weiteren Extruder ein weiterer Kunststoffstreifen extrudiert, der zu einer Außenschicht der erfindungsgemäßen Schlauchleitung gewickelt wird. Zweckmäßigerweise besteht der Kunststoffschaum dieses weiteren Kunststoffstreifens aus einem geschlossenporigen Kunststoffschaum bzw. im Wesentlichen aus einem geschlossenporigen Kunststoffschaum.

Nach sehr empfohlener Ausführungsform der Erfindung wird ein Kunststoffstreifen aus einem Kunststoffschaum mit der Maßgabe erzeugt, dass der Kunststoff extrudiert wird und der Kunststoff bei der Extrusion mittels eines Treibmittels zu dem Kunststoffschaum aufgeschäumt wird. Bei dem Treibmittel kann es sich um ein Schäumungsadditiv und/oder um ein Schäumungsgas handeln. Vorzugsweise schäumt der Kunststoff beim Austritt aus der Extrusionsdüse auf. Bei dem Schäumungsgas handelt es sich beispielsweise um Luft und/oder Stickstoff und/oder Kohlendioxid. Mit einem Schäumungsadditiv wird in der Regel die Freisetzung eines Gases durch Reaktion mit zumindest einer Komponente des Kunststoffes bzw. mit einem weiteren Additiv des Kunststoffes erzielt.

Nach der Erfindung werden der zumindest eine Kunststoffstreifen aus dem Kunststoffschaum und die Verstärkungswendel koextrudiert und zwar besonders bevorzugt gemeinsam unmittelbar auf den Wickelkern bzw. auf den rotierenden Wickelkern koextrudiert.

Nach einer anderen Ausführungsform eines Verfahrens zur Herstellung einer erfindungsgemäßen Schlauchleitung wird der Kunststoffstreifen aus dem Kunststoffschaum zunächst extrudiert, dann zwischengelagert und später zu dem Wickelschlauch gewickelt und vorzugsweise mit einer integrierten Verstärkungswendel zu dem Wickelschlauch bzw. zu der Schlauchleitung gewickelt.

Es liegt im Rahmen der Erfindung, dass die erfindungsgemäße Schlauchleitung als Belüftungsschlauch verwendet wird und zwar nach einer empfohlenen Ausführungsform der Erfindung als Belüftungsschlauch für Gebäude bzw. für Räume von Gebäuden und dergleichen. Die erfindungsgemäße Schlauchleitung wird dann zweckmäßigerweise für die Durchleitung der Zuluft und der Abluft eines Belüftungssystems eingesetzt. Nach einer anderen empfohlenen Ausführungsform der Erfindung wird die erfindungsgemäße Schlauchleitung zur Belüftung von Gewässern eingesetzt und zwar insbesondere zur Belüftung von Teichen, Kläranlagen und Wasseraufbereitungsanlagen. Für diesen Verwendungszweck ist die Schlauchwandung der erfindungsgemäßen Schlauchleitung zumindest teilweise durchlässig für ein in dem Fluidkanal der Schlauchleitung geführtes gasförmiges Medium. Es wurde bereits weiter oben dargelegt, dass nach einer bewährten Ausführungsform der Erfindung die Durchlässigkeit der Schlauchwandung der Schlauchleitung mit Hilfe offener Poren in dem Kunststoffschaum des Kunststoffstreifens realisiert wird.

Der Erfindung liegt die Erkenntnis zugrunde, dass mit der erfindungsgemäßen Schlauchleitung eine Mehrzahl von Vorteilen in Kombination erreicht werden können. Die erfindungsgemäße Ausgestaltung der Schlauchleitung gewährleistet zunächst eine hervorragende akustische Isolierung bzw. Schallisolierung und zudem eine optimale thermische Isolierung der Schlauchleitung. Nichtsdestoweniger ist die Schlauchleitung sehr flexibel und somit variabel und problemlos verlegbar. Hinzu kommt, dass die erfindungsgemäße Schlauchleitung eine hohe mechanische Festigkeit bzw. Stabilität aufweist und gegenüber den verschiedensten äußeren mechanischen Einflüssen resistent ist. Sie weist insbesondere eine optimale Trittfestigkeit auf. Im Übrigen lässt sich die erfindungsgemäße Schlauchleitung mit dem erfindungsgemäßen Verfahren auf relativ einfache und wenig aufwändige Weise herstellen. Die Herstellung der Schlauchleitung ist zudem kostengünstig möglich.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht einer erfindungsgemäßen Schlauchleitung,
- Fig. 2: einen Längsschnitt durch eine erfindungsgemäße Schlauchleitung und
- Fig. 3: eine schematische Darstellung einer Vorrichtung zur Durchführung des erfindungsgemäßen Verfahrens für die Herstellung der erfindungsgemäßen Schlauchleitung.

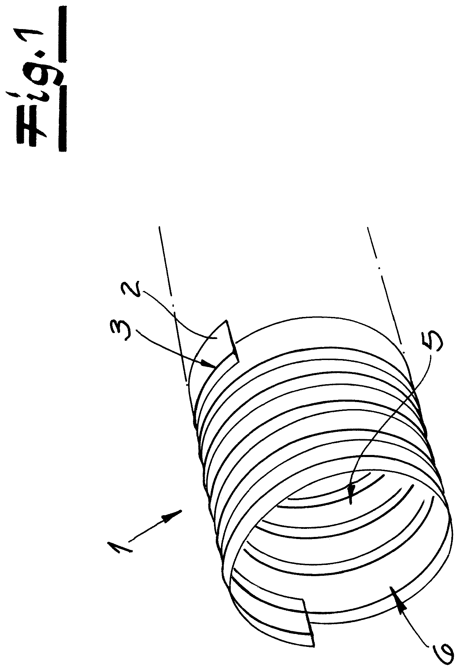

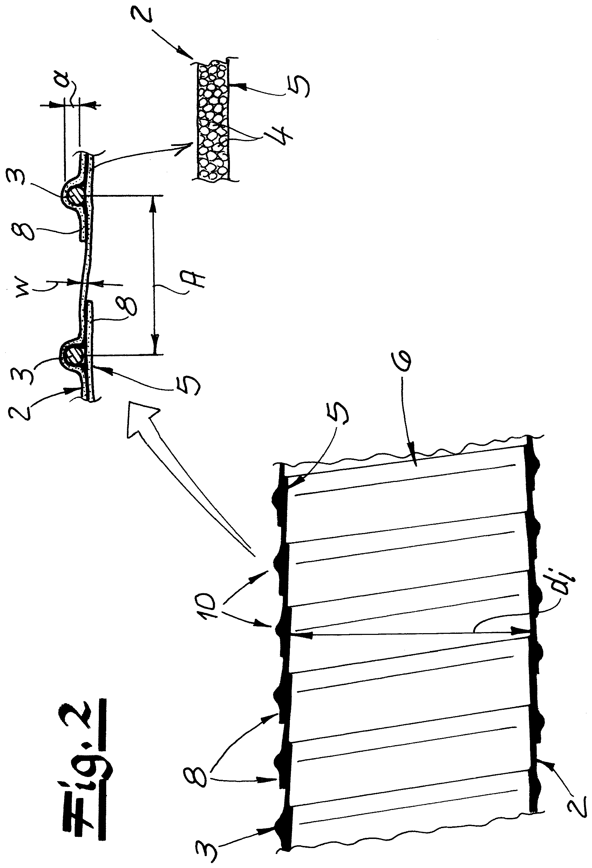

Die Fig. 1 und 2 zeigen eine erfindungsgemäße Schlauchleitung für ein fluides Medium, wobei diese Schlauchleitung vorzugsweise als Belüftungsschlauch verwendet wird. Andere Einsatzzwecke sind allerdings ebenfalls möglich. Die Schlauchleitung ist erfindungsgemäß in Form eines Wickelschlauches 1 ausgebildet und nach bevorzugter Ausführungsform und im Ausführungsbeispiel weist der Wickelschlauch 1 einen zu einem Schlauchkörper wendelförmig gewickelten Kunststoffstreifen 2 auf. Weiterhin ist der Wickelschlauch 1 bevorzugt und im Ausführungsbeispiel mit zumindest einer mit dem Schlauchkörper verbundenen und den Schlauchkörper verstärkenden Verstärkungswendel 3 ausgestattet. Erfindungsgemäß ist der Kunststoffstreifen 2 in Form eines polymeren Kunststoffschaumes ausgebildet. Der Kunststoffschaum weist ein Porenvolumen von 10 bis 75 % auf. Im Ausführungsbeispiel mag der polymere Kunststoffschaum des Kunststoffstreifens 2 aus Polyurethan (PU) bestehen. Nach einer Ausführungsform und im Ausführungsbeispiel sind die Poren des den Kunststoffstreifen 2 bildenden Kunststoffschaumes zu mindestens 70 % als geschlossene Poren 4 ausgebildet. Diese Ausführungsform zeichnet sich durch eine besonders gute akustische Isolierung und thermische Isolierung des Wickelschlauches 1 aus.

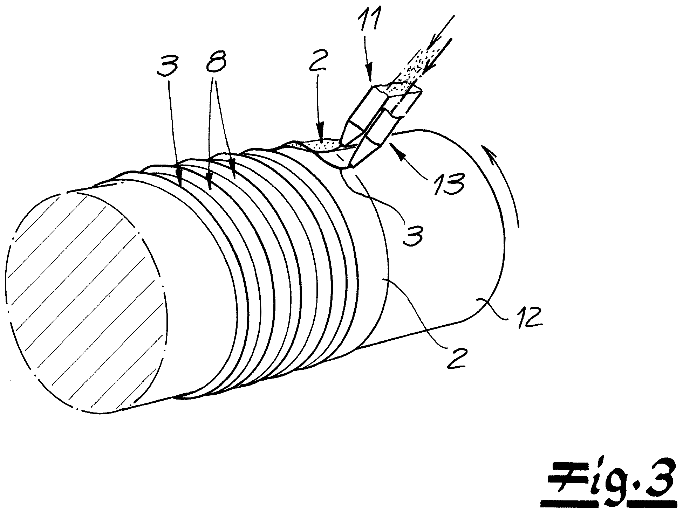

Der Kunststoffstreifen 2 ist wendelförmig zu dem Schlauchkörper gewickelt und zwar indem Längskantenabschnitte 8 benachbarter Wicklungen des Kunststoffstreifens 2 überlappend miteinander verbunden sind. Die bevorzugte Herstellung des Wickelschlauches 1 bzw. der Schlauchleitung wird weiter unten noch anhand der Fig. 3 erläutert. Vorzugsweise und im Ausführungsbeispiel bildet der wendelförmig gewickelte Kunststoffstreifen 2 aus dem Kunststoffschaum die Innenoberfläche 5 des das fluide Medium führenden Fluidkanals 6 des Wickelschlauches 1 bzw. der Schlauchleitung. Der Innendurchmesser dᵢ des Fluidkanals mag im Ausführungsbeispiel 120 mm betragen. Im Ausführungsbeispiel nach den Figuren bildet der zu dem Schlauchkörper wendelförmig gewickelte Kunststoffstreifen 2 auch die Außenschicht bzw. die Außenoberfläche der Schlauchleitung.

Nach bevorzugter Ausführungsform und im Ausführungsbeispiel ist die Verstärkungswendel 3 bezüglich ihres Querschnittsumfanges vollständig von dem wendelförmig gewickelten Kunststoffstreifen 2 eingeschlossen. Zweckmäßigerweise und im Ausführungsbeispiel ist die Verstärkungswendel 3 zwischen überlappenden Längskantenabschnitten 8 des Kunststoffstreifens 2 eingeschlossen und zwar bevorzugt und im Ausführungsbeispiel formschlüssig eingeschlossen. Es liegt im Rahmen der Erfindung, dass die Verstärkungswendel 3 aus einem thermoplastischen Kunststoff besteht bzw. im Wesentlichen besteht. Empfohlenermaßen und im Ausführungsbeispiel ist die Verstärkungswendel 3 als extrudierte Verstärkungswendel 3 aus thermoplastischem Kunststoff ausgebildet. Eine bevorzugte Herstellung der Verstärkungswendel 3 wird weiter unten noch im Zusammenhang mit der Fig. 3 erläutert. - Nach einer Ausführungsform der Erfindung und im Ausführungsbeispiel ragt die Verstärkungswendel 3 mit dem sie bedeckenden Kunststoffschaum um den Abstand a aus der übrigen Außenoberfläche 9 des Schlauchkörpers bzw. der Schlauchleitung heraus. Der Abstand a ist im Ausführungsbeispiel größer als die radiale Wandungsdicke w der Schlauchwandung des Schlauchkörpers bzw. der Schlauchleitung. Benachbarte Wendelabschnitte 10 der in den Wickelschlauch 1 integrierten Verstärkungswendel 3 weisen einen axialen Abstand A voneinander auf. Dieser axiale Abstand A beträgt bevorzugt und im Ausführungsbeispiel mehr als das 8-fache des Durchmessers bzw. des größten Durchmessers des Querschnittes der Verstärkungswendel 3.

Die Fig. 3 zeigt eine Vorrichtung für die Durchführung einer bevorzugten Ausführungsform des erfindungsgemäßen Verfahrens. Bei diesem Verfahren wird der Kunststoffstreifen 2 mittels eines ersten Extruders 11 als polymerer Kunststoffschaum unmittelbar auf den vorzugsweise rotierenden Wickelkern 12 extrudiert und auf dem Wickelkern 12 wendelförmig zu dem Wickelschlauch 1 gewickelt. Dabei werden die Längskantenabschnitte 8 benachbarter Wicklungen des Kunststoffstreifens 2 überlappend miteinander verbunden bzw. miteinander verschweißt. Es wurde bereits darauf hingewiesen, dass die Verstärkungswendel 3 nach bevorzugter Ausführungsform der Erfindung aus zumindest einem Kunststoff besteht bzw. im Wesentlichen besteht. Zweckmäßigerweise wird im Rahmen des erfindungsgemäßen Verfahrens die Verstärkungswendel 3 durch Extrusion des entsprechenden thermoplastischen Kunststoffes aus einem zweiten Extruder 13 erzeugt und dabei wird der extrudierte Kunststoff der Verstärkungswendel auf dem rotierenden Wickelkern 12 zu der Verstärkungswendel 3 geformt bzw. gewickelt. Dabei wird die Verstärkungswendel 3 zwischen überlappenden Längskantenabschnitten 8 benachbarter Wicklungen des Wickelschlauches 1 eingeschlossen.

## Patentansprüche

1. Schlauchleitung für ein fluides Medium - insbesondere Belüftungsschlauch - in Form eines Wickelschlauches (1) mit zumindest einem zu einem Schlauchkörper wendeiförmig gewickelten Kunststoffstreifen (2) und zumindest einer mit dem Schlauchkörper verbundenen und den Schlauchkörper verstärkenden Verstärkungswendel (3), wobei der Kunststoffstreifen (2) in Form eines polymeren Kunststoffschaumes ausgebildet ist, wobei der Kunststoffschaum ein Porenvolumen von 10 bis 75 %, insbesondere von 15 bis 70 % aufweist und wobei die Verstärkungswendel als eine mit dem Kunststoffstreifen koextrudierte Wendel aus Kunststoff ausgebildet ist.

2. Schlauchleitung nach Anspruch 1, wobei der polymere Kunststoffschaum auf Basis zumindest eines thermoplastischen Kunststoffes aus der Gruppe "Polyvinylchlorid (PVC), Polyurethan (PU), Polyolefin" ausgebildet ist.

3. Schlauchleitung nach einem der Ansprüche 1 oder 2, wobei der Kunststoffschaum des Kunststoffstreifens (2) ein Porenvolumen von 35 bis 75 % und insbesondere von 40 bis 70 % aufweist.

4. Schlauchleitung nach einem der Ansprüche 1 bis 3, wobei der Kunststoffschaum des Kunststoffstreifens (2) eine Dichte von 0,4 bis 0,8 g/cm³, zweckmäßigerweise von 0,45 bis 0,75 g/cm³ aufweist.

5. Schlauchleitung nach einem der Ansprüche 1 bis 4, wobei die Poren des Kunststoffschaumes des Kunststoffstreifens (2) zu mindestens 65 %, vorzugsweise zu mindestens 75 % als geschlossene Poren (4) ausgebildet sind.

6. Schlauchleitung nach einem der Ansprüche 1 bis 5, wobei der wendeiförmig gewickelte Kunststoffstreifen (2) aus dem Kunststoffschaum die Innenoberfläche (5) des das fluide Medium führenden Fluidkanals (6) bildet.

7. Schlauchleitung nach einem der Ansprüche 1 bis 6, wobei im Bereich der an den Fluidkanal (6) der Schlauchleitung angrenzenden Innenoberfläche (5) des Kunststoffstreifens (2) eine Vielzahl von offenen Poren angeordnet ist.

8. Schlauchleitung nach einem der Ansprüche 1 bis 7, wobei der Kunststoffstreifen (2) bzw. der Kunststoffschaum des Kunststoffstreifens (2) zumindest einen Füllstoff aufweist und wobei der Füllstoff vorzugsweise bis zu 50 Gew.-% in dem Kunststoffschaum vorhanden ist.

9. Schlauchleitung nach Anspruch 8, wobei der Füllstoff zumindest ein Metallsalz ist und beispielsweise ein Erdalkalimetallsalz ist.

10. Schlauchleitung nach einem der Ansprüche 1 bis 9, wobei die Verstärkungswendel (3) bezüglich ihres Querschnittsumfanges vollständig von dem wendeiförmig gewickelten Kunststoffstreifen (2) eingeschlossen ist.

11. Schlauchleitung nach einem der Ansprüche 1 bis 10, wobei die Verstärkungswendel (3) aus zumindest einem bzw. einem Kunststoff aus der Gruppe "Polyamid (PA), Polyvinylchlorid (PVC), Polyolefin, Polyurethan (PU)" besteht bzw. im Wesentlichen besteht.

12. Verfahren zur Herstellung einer Schlauchleitung bzw. eines Wickelschlauches wobei zumindest ein Kunststoffstreifen (2) aus einem polymeren Kunststoffschaum unmittelbar auf einen Wickelkern extrudiert wird und auf dem Wickelkern wendeiförmig zu dem Wickelschlauch gewickelt wird und wobei ein Kunststoffschaum für den Kunststoffstreifen eingesetzt wird, der ein Porenvolumen von 10 bis 75 %, insbesondere von 15 bis 70 % aufweist, wobei als Material für die Verstärkungswendel (3) Kunststoff eingesetzt wird und wobei der Kunststoff für die Verstärkungswendel (3) extrudiert wird und auf dem Wickelkern zur Verstärkungswendel (3) geformt bzw. gewickelt wird und wobei der zumindest eine Kunststoffstreifen (2) und die Verstärkungswendel (3) koextrudiert werden und vorzugsweise gemeinsam unmittelbar auf den Wickelkern koextrudiert werden.

## Claims

1. A hose line for a fluid medium - particularly a ventilation hose - in the form of a strip-wound hose (1) with at least one plastic strip (2), which is helically wound into a hose body, and with at least one reinforcement coil (3), which is connected to the hose body and reinforces the hose body, wherein the plastic strip (2) is realized in the form of a polymeric plastic foam, wherein the plastic foam has a pore volume of 10 to 75%, particularly 15 to 70%, and wherein the reinforcement coil is realized in the form of a coil of plastic that is coextruded with the plastic strip.

2. The hose line according to claim 1, wherein the polymeric plastic foam is realized on the basis of at least one thermoplastic of the group "polyvinyl chloride (PVC), polyurethane (PU), polyolefin."

3. The hose line according to one of claims 1 or 2, wherein the plastic foam of the plastic strip (2) has a pore volume of 35 to 75%, particularly 40 to 70%.

4. The hose line according to one of claims 1 to 3, wherein the plastic foam of the plastic strip (2) has a density of 0.4 to 0.8 g/cm³, preferably 0.45 to 0.75 g/cm³.

5. The hose line according to one of claims 1 to 4, wherein at least 65%, preferably at least 75%, of the pores of the plastic foam of the plastic strip (2) are realized in the form of closed pores (4).

6. The hose line according to one of claims 1 to 5, wherein the helically wound plastic strip (2) of the plastic foam forms the inner surface (5) of the fluid channel (6) conducting the fluid medium.

7. The hose line according to one of claims 1 to 6, wherein a plurality of open pores is arranged in the region of the inner surface (5) of the plastic strip (2), which borders on the fluid channel (6) of the hose line.

8. The hose line according to one of claims 1 to 7, wherein the plastic strip (2) or the plastic foam of the plastic strip (2) contains at least one filler, and wherein the plastic foam preferably contains up to 50 wt.-% of the filler.

9. The hose line according to claim 8, wherein the filler is at least one metal salt such as an alkaline earth metal salt.

10. The hose line according to one of claims 1 to 9, wherein the reinforcement coil (3) is with respect to its cross-sectional circumference completely enclosed by the helically wound plastic strip (2).

11. The hose line according to one of claims 1 to 10, wherein the reinforcement coil (3) consists or essentially consists of at least one or a plastic of the group "polyamide (PA), polyvinyl chloride (PVC), polyolefin, polyurethane (PU)."

12. A method for manufacturing a hose line or a strip-wound hose, wherein at least one plastic strip (2) of a polymeric plastic foam is extruded directly on a winding core and helically wound into the strip-wound hose on the winding core, wherein a plastic foam used for the plastic strip has a pore volume of 10 to 75%, particularly 15 to 70%, wherein plastic is used as material for the reinforcement coil (3), wherein the plastic for the reinforcement coil (3) is extruded and respectively formed or wound into the reinforcement coil (3) on the winding core, and wherein the at least one plastic strip (2) and the reinforcement coil (3) are coextruded and preferably jointly coextruded directly on the winding core.

## Revendications

1. Conduit flexible, destiné à un milieu fluide
- notamment flexible de ventilation -, sous la forme d'un flexible enroulable (1), pourvu d'au moins un ruban en matière plastique (2) enroulé en spirale en un corps de flexible et d'au moins une spirale de renfort (3), assemblée avec le corps de flexible et renforçant le corps de flexible, le ruban en matière plastique (2) étant conçu sous la forme d'une mousse en matière plastique polymère, la mousse en matière plastique présentant un volume poreux de 10 à 75 %, notamment de 15 à 70 % et la spirale de renfort étant conçue sous la forme d'une spirale en matière plastique coextrudée avec le ruban en matière plastique.

2. Conduit flexible selon la revendication 1, la mousse en matière plastique polymère étant conçue sur la base d'au moins une matière thermoplastique du groupe comprenant « le polychlorure de vinyle (PVC), le polyuréthane (PU), la polyoléfine ».

3. Conduit flexible selon l'une quelconque des revendications 1 ou 2, la mousse en matière plastique du ruban en matière plastique (2) présentant un volume poreux de 35 à 75 % et notamment de 40 à 70 %.

4. Conduit flexible selon l'une quelconque des revendications 1 à 3, la mousse en matière plastique du ruban en matière plastique (2) présentant une densité de 0,4 à 0,8 g/cm³, opportunément de 0,45 à 0,75 g/cm³.

5. Conduit flexible selon l'une quelconque des revendications 1 à 4, les pores de la mousse en matière plastique du ruban en matière plastique (2) étant conçus à raison d'au moins 65 %, de préférence à raison d'au moins 75 % en tant que pores fermés (4).

6. Conduit flexible selon l'une quelconque des revendications 1 à 5, le ruban en matière plastique (2) enroulé en spirale dans la mousse en matière plastique formant la surface interne (5) du canal à fluide (6) conduisant le milieu fluide.

7. Conduit flexible selon l'une quelconque des revendications 1 à 6, dans la zone de la surface interne (5) du ruban en matière plastique (2) adjacent au canal à fluide (6) du conduit flexible étant placée une pluralité de pores ouverts.

8. Conduit flexible selon l'une quelconque des revendications 1 à 7, le ruban en matière plastique (2) ou la mousse en matière plastique du ruban en matière plastique (2) comportant au moins un agent de charge et l'agent de charge étant présent à raison d'au moins jusqu'à 50 % en poids dans la mousse en matière plastique.

9. Conduit flexible selon la revendication 8, l'agent de charge étant au moins un sel métallique et par exemple un sel d'un métal alcalinoterreux.

10. Conduit flexible selon l'une quelconque des revendications 1 à 9, au niveau de la circonférence de sa section transversale, la spirale de renfort (3) étant totalement incluse dans le ruban en matière plastique (2) enroulé en spirale.

11. Conduit flexible selon l'une quelconque des revendications 1 à 10, la spirale de renfort (3) étant constituée ou majoritairement constituée d'au moins une ou d'une matière plastique du groupe comprenant
« le polyamide (PA), le polychlorure de vinyle (PVC), la polyoléfine, le polyuréthane (PU) ».

12. Procédé, destiné à produire un conduit flexible ou un flexible enroulable, lors duquel l'on extrude au moins un ruban en matière plastique (2) en une mousse en matière plastique polymère directement sur un noyau de bobinage et on l'enroule sur le noyau de bobinage pour obtenir le flexible enroulable et lors duquel l'on met en œuvre pour le ruban en matière plastique une mousse en matière plastique qui présente un volume poreux de 10 à 75 %, notamment de 15 à 70 %, en tant que matière pour la spirale de renfort (3) étant mise en œuvre une matière plastique et lors duquel l'on extrude la matière plastique pour la spirale de renfort (3) et on la façonne ou on l'enroule sur le noyau de bobinage pour obtenir la spirale de renfort (3) et lors duquel l'on coextrude l'au moins un ruban en matière plastique (2) et la spirale de renfort (3) et on les coextrude de préférence conjointement, directement sur le noyau de bobinage.
